**Europäisches Patentamt**

(19) **European Patent Office**

**Office européen des brevets**

(11) Veröffentlichungsnummer: **0 028 324**
**B1**

(12) **EUROPÄISCHE PATENTSCHRIFT**

(45) Veröffentlichungstag der Patentschrift:
**18.05.83**

(51) Int. Cl.³: **B 21 B 43/02**

(21) Anmeldenummer: **80106160.7**

(22) Anmeldetag: **10.10.80**

(54) Vorrichtung zum Stapeln von Flacheisen innerhalb eines Rechenkühlbettes.

(30) Priorität: **03.11.79 DE 2944493**

(43) Veröffentlichungstag der Anmeldung:
**13.05.81 Patentblatt 81/19**

(45) Bekanntmachung des Hinweises auf die Patenterteilung:
**18.05.83 Patentblatt 83/20**

(84) Benannte Vertragsstaaten:
**AT BE FR GB IT LU NL SE**

(56) Entgegenhaltungen:

**DE-A-1 777 053**
**DE-A-2 413 845**
**DE-B-2 153 342**
**DE-B-2 351 840**
**DE-C-678 022**
**DE-C-700 550**
**US-A-1 931 405**

(73) Patentinhaber: **MOELLER & NEUMANN GMBH,**
**Ensheimer Strasse 48, D-6670 St. Ingbert/Saar (DE)**

(72) Erfinder: **Buchheit, Otto Karl, Am Eulental 2, D-6670 St.**
**Ingbert/Saar (DE)**

(74) Vertreter: **Boecker, Carl Otto, Dipl.-Ing., Ensheimer**
**Strasse 48, D-6670 St.Ingbert-Saar (DE)**

**Vorrichtung zum Stapeln von Flacheisen innerhalb eines Rechenkühlbettes**

Die Erfindung betrifft eine Vorrichtung zum Stapeln von Flacheisen in den Rasten eines Rechenkühlbettes unabhängig vom Hub des Schwingrechens unter Verwendung einer bei stillstehendem Schwingrechen taktweise betätigbaren Stapelvorrichtung mit einer eine geschlossene ellipsenartige Koppelkurve ausführenden winkelförmigen Stapeltasche mit einem aufrecht stehenden Schenkel entsprechend der Höhe des zu bildenden Flacheisenstapels, wobei die Stapeltasche eine erste Rast, in die die Flachstäbe vom Auflaufrollgang übergeben werden, und eine feststehende Rast des Rechenkühlbettes durchläuft. Eine derartige Flacheisen-Stapelvorrichtung ist durch die DE-C-700 550 bekannt geworden. Bei dieser bekannten Stapelvorrichtung erwartet die Stapeltasche in Anfangslage einen jeden vom Auflaufrollgang ausgehobenen Flachstab, so dass sich in der Stapeltasche ein Flacheisenstapel bildet. Nach der Aufnahme eines jeden Flacheisens vollführt die Stapeltasche eine geschlossene ellipsenartige Koppelkurve, bis zur Rückkehr in die Anfangsstellung, damit eine Klappe in Verlängerung einer Schrägfläche des Auflaufrollganges stets über das oberste Flacheisen zu liegen kommt. Wenn der Flacheisenstapel gebildet ist, wird die Stapeltasche nur etwa über die Hälfte der geschlossenen Koppelkurve bis in eine Lage geführt, in der sie quasi die erste starre Rast des Rechenkühlbettes bildet, aus der der Schwingrechen dann den Stapel übernimmt. Da die Stapelvorrichtung unabhängig vom Hub des Schwingrechens arbeitet, können alle Rasten des Rechenkühlbettes mit Flacheisenstapeln belegt werden.

Nachteilig bei dieser bekannten Flacheisen-Stapelvorrichtung ist es, dass sie auch dann betätigt werden muss, wenn Walzstäbe auf das Kühlbett verbracht werden sollen, die nicht gestapelt werden sollen oder können. Ferner ist antriebsseitig vorzusehen, dass ein Antriebsexzenter zum Bewegen der Stapeltasche während des Stapelvorganges taktweise Umdrehungen um 360° auszuführen hat, zur Übergabe an das Kühlbett jedoch nur eine Teildrehung ausführen darf. Dies bedeutet erhöhten elektrischen Aufwand.

In Verbesserung der vorgeschriebenen altbekannten Flacheisen-Stapelvorrichtung ist eine Vorrichtung zum Stapeln von Flachstäben innerhalb des Rechenkühlbettes bekannt geworden (DE-B2-23 51 840) mit einer Wirkungsweise, bei der der in die erste Rast des Rechenkühlbettes ausgeworfene Flachstab im Rechentakt der beweglichen Rechen in die zweite Rast weitergefördert und danach in die erste Rast über den nachfolgenden Flachstab zurückgeschoben wird, wobei die so gebildete Stapellage in gleicher Weise so oft über den jeweils nachfolgenden Flachstab geschoben wird, bis die Stapellage eine der Rasttiefe entsprechende Höhe erreicht hat. Zum Zurückschieben der in der zweiten Rast befindlichen Flachstäbe dienen eine Reihe von beweglichen Schiebern. Da bei dieser bekannten Vorrichtung der Schwingrechen stabweise betätigt werden muss, um die erste feste Rast des Kühlbettes für einen nachfolgenden Einzelstab freizumachen, bleiben so viele Rasten des Kühlbettes ungenutzt wie die Anzahl des zu bildenden Flacheisenstapels ausmacht.

Der Erfindung liegt die Aufgabe zugrunde, eine Flacheisenstapelvorrichtung nach der DE-C-700 550 dahingehend zu verbessern, dass die winkelförmige Stapeltasche bei jedem Arbeitszyklus ausschliesslich eine geschlossene ellipsenartige Koppelkurve beschreibt, ein Exzenterantrieb also stets nur eine volle Umdrehung auszuführen hat. Die Unabhängigkeit der Stapelbildung vom Hub des Schwingrechens soll im Gegensatz zu der Vorrichtung nach der DE-B2-23 51 840 erhalten bleiben.

Die Erfindung besteht darin, dass die winkelförmige Stapeltasche die erste und die zweite Rast des feststehenden Kühlbettrechens durchlaufend angetrieben ist derart, dass aus der der zweiten Rast zugeordneten Anfangslage die Koppelkurve nach unten gehend zur ersten Rast und dann nach oben gehend zur zweiten Rast zurückkehrt, und dass der aufrecht stehende Schenkel der Stapeltasche um soviel höher ist als die Höhe des zu bildenden Flacheisenstapels, dass bei Durchlauf der Stapeltasche von der zweiten zur ersten Rast des Kühlbettrechens der Schenkel die in der zweiten Rast befindlichen Flachstäbe in die erste Rast verschiebt. In der Funktion entspricht diese Stapelvorrichtung derjenigen nach der DE-B2-23 51 840 mit dem Unterschied jedoch, dass der Schwingrechen an der Stapelbildung nicht beteiligt ist. Alle Rasten des Kühlbettes können mit Flacheisenstapeln belegt werden. Dies kommt der Forderung entgegen, dass Stapel von Flacheisen eine längere Kühlzeit benötigen, unter welchem Gesichtspunkt es sehr nachteilig ist, wenn beispielsweise bei Stapeln mit vier Flachstäben jeweils drei nachfolgende Rasten des Kühlbettes unbelegt bleiben. Auch ist eine schwingende Stapeltasche nach der DE-C-700 550 apparativ einfacher als die Anordnung einer grossen Anzahl von hydraulisch betätigten Querschiebern, deren Hydraulikzylinder eine Gleichlaufsteuerung benötigen, wenn ordnungsgemässe Stapel gebildet werden sollen.

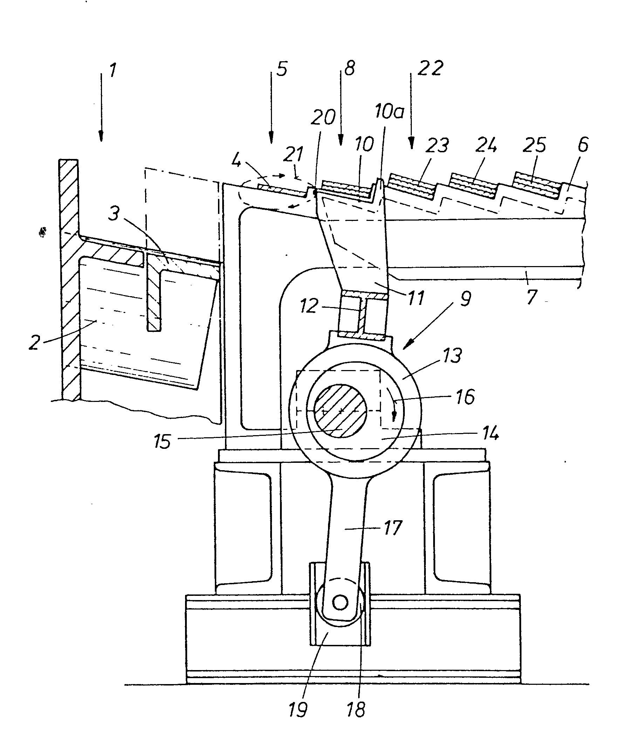

In der Zeichnung ist ein Ausführungsbeispiel einer Stapelvorrichtung gemäss der Erfindung dargestellt. Man erkennt einen Auflaufrollgang 1 mit den geneigten Rollen 2 und den heb- und senkbaren Bremsschiebern 3, die in der strichpunktiert dargestellten Hochlage einen jeden Flachstab 4 aus dem Auflaufrollgang 1 in die erste feste Rast 5 des feststehenden Kühlbettrechens 6 ausheben. Der teilweise gestrichelt dargestellte Schwingrechen 7 befindet sich mit seiner ersten Rast unterhalb der zweiten festen Rast 8 des feststehenden Kühlbettrechens 6.

Zwischen der ersten Rast 5 und der zweiten Rast 8 des feststehenden Kühlbettrechens 6 ist eine Stapelvorrichtung 9 mit einer winkelförmigen Stapeltasche 10 wirksam, deren aufrecht stehender Schenkel 10a eine bestimmte Mindestlänge haben muss, wie noch erläutert wird. Die Stapeltasche 10 wird von einer Reihe von zwischen den Rechenstäben verlaufenden Flächen 11 gebildet, die von einem gemeinsamen Träger 12 getragen sind. Dieser Träger ruht auf mindestens zwei äusseren Lagerringen 13 von Exzentern 14, deren Achse 15 zum taktweisen Drehen um jeweils 360° angetrieben ist. Die Umdrehungsrichtung ist durch den Pfeil 16 angedeutet.

Die Lagerringe 13 haben einen nach unten gerichteten Fortsatz 17, der über eine Rolle 18 in einer Geradführung 19 geradgeführt ist. Die kinematischen Verhältnisse sind so getroffen, dass bei einer Umdrehung der Exzenter 14 ein Punkt 20 der Stapeltasche 10 eine geschlossene, flach liegend ellipsenartige Koppelkurve 21 beschreibt, und zwar bei der angegebenen Drehrichtung 16 von Punkt 20 ausgehend zunächst nach unten und dann oberhalb der festen Rast 5 des Kühlbettrechens 6 zum Ausgangspunkt 20 zurück, wie durch Pfeile angedeutet ist.

Die Wirkungsweise der beschriebenen Stapelvorrichtung für Flachstäbe ist folgende:

Wenn ein Flachstab 4 mittels der Bremsschieber 3 aus der Auflaufrinne 1 ausgehoben wird und in die erste feste Rast 5 des festen Kühlbettrechens 6 gelangt, bleibt der Schwingrechen 7 in Ruhe. Statt dessen wird die Stapelvorrichtung 9 in der Weise betätigt, dass der Antrieb für die Welle 15 für eine volle Umdrehung um 360° eingeschaltet wird. Hierbei beschreibt jeder Punkt der Stapeltasche 10 die bereits erwähnte geschlossene Koppelkurve 21, wobei aus der der zweiten Rast 8 zugeordneten Anfangslage die Koppelkurve 21 nach unten gehend zur ersten Rast 5 und dann nach oben gehend zur zweiten Rast 8 zurückkehrt. Bei der Bewegung der Stapeltasche 10 von der Rast 8 zur Rast 5 wird ein oder werden mehrere in der Rast 8 befindliche Flachstäbe durch den aufrecht stehenden Schenkel 10a in die Rast 5 zurückgeschoben und legen sich auf den dort befindlichen Flachstab 4. Bei der Rückkehr der Stapeltasche 10 in die dargestellte Anfangslage wird der oder werden die in der Rast 5 befindlichen Flachstäbe in die zweite Rast 8 übergehoben. Dieser Vorgang wird jeweils nach Ankunft eines neuen Flachstabes 4 in der festen Rast 5 wiederholt, und zwar so oft, wie es die gewünschte Anzahl von aufeinander zu stapelnden Flachstäben erfordert. Aus diesem Grunde muss der aufrecht stehende Schenkel 10a der Stapeltasche 10 um so viel höher sein als die Höhe des zu bildenden Flacheisenstapels, dass bei Durchlauf der Stapeltasche von der zweiten Rast 8 zur ersten Rast 5 der notwendigerweise abwärts gehende Schenkel die in der zweiten Rast befindlichen Flachstäbe mit Sicherheit in die erste Rast 5 verschiebt. Wenn auf diese Weise in der zweiten Rast 8 des feststehenden Rechens 6 der Flacheisenstapel in der gewünschten Höhe gebildet ist, wird der Schwingrechen 7 zur Ausführung eines Förderhubes eingeschaltet. Da in der Zeichnung Verhältnisse dargestellt sind, bei denen die mit der Rast 8 fluchtende Stapeltasche 10 zwei Flachstäbe trägt, zu denen beim nächsten Arbeitsspiel der Stapelvorrichtung 9 noch der Flachstab 4 aus der ersten festen Rast 5 hinzukommt, hebt der Schwingrechen 7, der mit seiner ersten Rast die Stapeltasche 10 durchläuft, einen Stapel von drei Flachstäben aus, der über den Schwingrechenhub in die dritte starre Rast 22 des festen Rechens 6 abgelegt wird. Man sieht, dass alle Rasten des Rechens 6 mit Flacheisenstapeln 23, 24, 25 belegt sind.

Wenn die Stabfolgezeit der in der ersten starren Rast 5 zur Ruhe kommenden Flachstäbe 4 mit der Zeit übereinstimmt, die die Antriebswelle 15 für eine volle Umdrehung benötigt, kann der Antrieb für diese Antriebswelle auch durchlaufen.

## Patentanspruch

Vorrichtung zum Stapeln von Flacheisen in den Rasten (5, 8, 22) eines Rechenkühlbettes unabhängig vom Hub des Schwingrechens (7) unter Verwendung einer bei stillstehendem Schwingrechen (7) taktweise betätigbaren Stapelvorrichtung (9) mit einer eine geschlossene ellipsenartige Koppelkurve (21) ausführenden winkelförmigen Stapeltasche (10) mit einem aufrecht stehenden Schenkel (10a) entsprechend der Höhe des zu bildenden Flacheisenstapels, wobei die Stapeltasche (10) eine erste Rast (5), in die die Flachstäbe (4) vom Auflaufrollgang (1) übergeben werden, und eine feststehende Rast des Rechenkühlbettes durchläuft, dadurch gekennzeichnet, dass die winkelförmige Stapeltasche (10) die erste (5) und die zweite Rast (8) des feststehenden Kühlbettrechens (6) durchlaufend angetrieben ist derart, dass aus der der zweiten Rast (8) zugeordneten Anfangslage die Koppelkurve (21) nach unten gehend zur ersten Rast (5) und dann nach oben gehend zur zweiten Rast (8) zurückkehrt, und dass der aufrecht stehende Schenkel (10a) der Stapeltasche (10) um soviel höher ist als die Höhe des zu bildenden Flacheisenstapels (23), dass bei Durchlauf der Stapeltasche (10) von der zweiten (8) zur ersten Rast (5) des feststehenden Kühlbettrechens der Schenkel (10a) die in der zweiten Rast (8) befindlichen Flachstäbe in die erste Rast (5) verschiebt.

## Claim

A device for the stacking of flat irons within the notches (5, 8, 22) of a rake-type cooling bed independent of the oscillating rake stroke (7) on application of a stacking device (9) which can be cycle-wise actuated during the still-standig period of the oscillating grid (7), comprising an angular stacking pocket (10) performing a closed ellipse-type coupler-curve (21) and having an upright standing leg (10a) in accordance with the height of the flat iron stack to be built, whereby the stacking pocket (10) passes a first notch (5) into which the flat bars (4) will be transfered by the approach roller table (1), and passes a stationary notch of the rake-type cooling bed as well, characterized in, that the angular stacking pocket (10) is driven as to pass the first notch (5) and the second notch (8) of the stationary cooling bed rake (6) continuously in such a way that starting from the initial position allocated to the second notch (8) the coupler curve moves downwards to the first notch (5) and then moves upwards returning to the second notch (8) and that the upright standing leg (10a) is much higher than the height of the flat iron stack (23) to be built, so that during the pass of the stacking pocket (10) from the second notch (8) up to the first notch (5) of the stationary cooling bed rake the leg (10a) shifts the flat bars positioned within the second notch (8) into the first notch (5).

**Revendication**

Dispositif d'empilage de tôles planes dans les crans (5, 8, 22) d'un refroidisseur à râteaux indépendamment du mouvement d'élévation du râteau de transbordement (7), grâce à l'utilisation d'un dispositif d'empilage (9) actionnable alternativement alors que le râteau de transbordement (7) est au repos, ce dispositif comportant une poche d'empilage (10) de forme angulaire, décrivant une courbe d'accouplement (21) en ellipse fermée, cette poche d'empilage (10) présentant une aile (10a) s'étendant vers le haut et correspondant à la hauteur de l'empilage de tôles planes devant être formé, de telle façon que la poche d'empilage (10) se déplace entre un premier cran (5) dans lequel sont transférées les tôles planes (4) à partir d'un train de rouleaux d'alimentation (1), et un cran fixe du refroidisseur à râteaux, caractérisé en ce que la poche d'empilage angulaire (10) se déplaçant entre le premier cran (5) et le deuxième cran (8) du refroidisseur à râteaux fixe (6) est entraînée de telle façon que la courbe d'accouplement (21) s'étende vers le bas, en partant de la position de départ située à l'endroit du deuxième cran (8), jusqu'au premier cran (5) puis revienne, en s'étendant vers le haut, jusqu'au deuxième cran (8), et en ce que l'aile (10a) s'étendant vers le haut de la poche d'empilage (10) a une hauter supérieure à la hauteur de la pile de tôles planes (23) devant être formée si bien que, lors de la course de la poche d'empilage (10) du deuxième cran (8) au premier cran (5) du refroidisseur à râteaux l'aile (10a) repousse les tôles planes se trouvant dans le deuxième cran (8) vers et dans le premier cran (5).